# EUROPÄISCHE PATENTSCHRIFT

(11) **EP 4 399 490 B1**
(45) Veröffentlichungstag und Bekanntmachung des Hinweises auf die Patenterteilung: **25.03.2026**
(21) Anmeldenummer: 22768337.2
(22) Anmeldetag: 19.08.2022
(51) Int. Cl.: G01D 11/30, F16B 21/04

(54) **BEFESTIGUNGSTEIL FÜR EIN GEHÄUSE SOWIE GEHÄUSE FÜR EIN FELDGERÄT**
MOUNTING PART FOR A HOUSING AND HOUSING FOR A FIELD DEVICE
PIÈCE DE DE MONTAGE POUR UN BOÎTIER ET BOÎTIER POUR UN APPAREIL DE TERRAIN

(30) Priorität: 10.09.2021 DE 102021123444
(43) Veröffentlichungstag der Anmeldung: 17.07.2024
(73) Patentinhaber: Endress+Hauser Flowtec AG, 4153 Reinach (CH)
(72) Erfinder: LARSSON, Björn, 4127 Birsfelden (CH); SCHÖNE, David, 4054 Basel (CH)
(74) Vertreter: Endress + Hauser Group Services (Deutschland) AG+Co. KG
(86) Internationale Anmeldenummer: PCT/EP2022/073138
(87) Internationale Veröffentlichungsnummer: WO 2023/036582

(56) Entgegenhaltungen:
- EP-A1- 3 339 664
- WO-A1-2007/090421
- US-A1- 2018 299 370

## Beschreibung

Die Erfindung betrifft ein Befestigungsteil für ein Gehäuse sowie ein Gehäuse für ein Feldgerät.

In der Analysemesstechnik, insbesondere im Bereich der Wasserwirtschaft, der Umweltanalytik, im industriellen Bereich, z.B. in der Lebensmitteltechnik, der Biotechnologie und der Pharmazie, sowie für verschiedenste Laboranwendungen werden Gehäuse verwendet, um zum Beispiel Elektronikbauteile vor Umwelteinflüssen sicher unterzubringen. Da eine Wartung oder unter Umständen eine Reparatur der Elektronikbauteile garantiert werden soll, muss das Gehäuse von dem Benutzer geöffnet werden können. Gleichzeitig muss jedoch auch ein sicherer Wiederverschluss des Gehäuses möglich sein. Das Gehäuse weist hierzu einen Gehäusekörper und einen Deckel auf. Der Deckel ist meistens mit Hilfe von Schrauben an dem Gehäusekörper befestigt.

Jedoch hat die Verwendung von Schrauben den Nachteil, dass die Wartung komplizierter wird, da die Schrauben einzeln mithilfe von Werkzeug entfernt werden müssen. Zudem können entfernte Schrauben leicht verloren gehen, was ein zusätzliches Sicherheitsrisiko für die Industrieanlage, an welcher das Feldgerät verwendet wird, verursacht.

Das Dokument US 2018/299370 A1 beschreibt ein Befestigungsteil für ein Gehäuse mit einem Bajonettverschluss.

Es ist daher eine Aufgabe der Erfindung, ein Gehäuse für ein Feldgerät bereitzustellen, welches eine komfortable und sichere Handhabung ermöglicht.

Diese Aufgabe wird erfindungsgemäß gelöst durch ein Befestigungsteil für eine Abdeckung an einem Gehäuse gemäß Anspruch 1.

Das erfindungsgemäße Befestigungsteil ist ringförmig und erstreckt sich um eine Längsachse. Das Befestigungsteil weist einen ersten Rand und einen dem ersten Rand gegenüberliegenden zweiten Rand auf. Der erste Rand weist mindestens zwei Bajonettnuten auf, welche dazu geeignet sind, das Befestigungsteil an dem Gehäuse zu befestigen. Die Bajonettnuten erstrecken sich entlang der Längsachse und quer zur Längsachse um die Längsachse herum. Die Bajonettnuten weisen jeweils einen Einlass, eine Rippe, einen Anschlag und einen Nutboden mit einer Nuttiefe auf. Der Anschlag begrenzt die Bajonettnuten in ihrer Erstreckung um die Längsachse. Die Rippe ist zwischen dem Einlass und dem Anschlag auf dem Nutboden angeordnet und erstreckt sich vom Nutboden radial zur Längsachse mit einer vorbestimmten Höhe.

Anhand des erfindungsgemäßen Befestigungsteils wird ermöglicht, ein Befestigungsteil für ein Gehäuse bereitzustellen, welches komfortabel und sicher ist. Das Befestigungsteil weist keine Schrauben auf, sondern ermöglicht vielmehr das Verzichten auf separate Verschlussmittel. Zudem ist das Befestigungsteil robust, da die zum Verschluss notwendigen Halteelemente derart angeordnet sind, dass diese nicht abbrechen können. Gemäß einer Ausführungsform der Erfindung erstreckt sich die Rippe um die Längsachse und weist ein erstes Rippenende sowie ein zweites Rippenende auf. Das erste Rippenende weist eine erste Rippenfase auf und das zweite Rippenende weist eine zweite Rippenfase auf.

Gemäß einer Ausführungsform der Erfindung umfasst das Befestigungsteil ein elastisches Material.

Gemäß einer Ausführungsform der Erfindung weist die Bajonettnut eine Längsnut und eine Quernut auf. Die Quernut verläuft parallel oder schräg zum ersten Rand.

Gemäß einer Ausführungsform der Erfindung definieren die Bajonettnuten jeweils mit dem Einlass und dem Anschlag einen Mittelpunktswinkel zwischen 10° und 150° an der Längsachse.

Gemäß einer Ausführungsform der Erfindung weist das Befestigungsteil mindestens eine erste Bajonettnut und eine der ersten Bajonettnut am Befestigungsteil gegenüberliegende zweite Bajonettnut auf.

Gemäß der beanspruchten Erfindung weist der zweite Rand einen Vorsprung auf, welcher sich radial zur Längsachse hin erstreckt.

Die oben genannte Aufgabe wird des Weiteren gelöst durch ein Gehäuse für ein Feldgerät gemäß Anspruch 7.

Das erfindungsgemäße Gehäuse umfasst:
- ein erfindungsgemäßes Befestigungsteil,
- einen zylinderförmigen Gehäusekörper, welcher sich um die Längsachse erstreckt und einen Gehäuserand aufweist, welcher mindestens zwei Bajonettzähne aufweist, die sich jeweils radial zur Längsachse erstrecken. Die Bajonettzähne sind jeweils komplementär zu den Bajonettnuten. Die Bajonettzähne weisen ein erstes Zahnende und ein zweites Zahnende auf. Am ersten Zahnende ist eine erste Zahnfase und am zweiten Zahnende ist eine zweite Zahnfase und/oder am ersten Rippenende ist eine erste Rippenfase und am zweiten Rippenende ist eine zweite Rippenfase angeordnet, oder
am ersten Zahnende ist eine erste Zahnfase und am zweiten Rippenende ist eine zweite Rippenfase oder am ersten Rippenende ist eine erste Rippenfase und am zweiten Zahnende ist eine zweite Zahnfase angeordnet. Die Rippen und die Bajonettzähne sind dazu geeignet, miteinander in Kontakt zu kommen, wenn die Bajonettzähne in den Bajonettnuten bewegt werden.

Gemäß einer Ausführungsform der Erfindung definieren das erste Zahnende und das zweite Zahnende eine Zahnlänge und das zweite Rippenende und der Anschlag definieren eine Rippen-Anschlag-Länge. Die Zahnlänge und die Rippen-Anschlag-Länge sind identisch, so dass der Bajonettzahn dazu geeignet ist, zwischen die Rippe und den Anschlag zu greifen.

Gemäß einer Ausführungsform der Erfindung definieren das erste Rippenende und das zweite Rippenende eine Rippenlänge und der Bajonettzahn weist eine Aussparung auf, welche zwischen dem ersten Zahnende und dem zweiten Zahnende angeordnet ist und eine Aussparungslänge aufweist, wobei die Aussparungslänge und die Rippenlänge identisch sind, so dass die Rippe dazu geeignet ist, in die Aussparung zu greifen.

Die Erfindung wird anhand der nachfolgenden Figurenbeschreibung näher erläutert. Es zeigen:
- Fig. 1: eine perspektivische Darstellung des erfindungsgemäßen Befestigungsteils;
- Fig. 2: eine Schnittdarstellung eines Feldgeräts mit einem erfindungsgemäßen Gehäuse und dem Befestigungsteil aus Figur 1;
- Fig. 3: eine vergrößerte Darstellung eines Ausschnitts aus Figur 2 mit dem Befestigungsteil und dem Gehäuse;
- Fig. 4: eine perspektivische Darstellung eines Ausschnitts des Befestigungsteils aus Figur 3;
- Fig. 5: eine perspektivische Darstellung eines Feldgeräts mit dem Befestigungsteil und dem Gehäuse; und
- Fig. 6: eine perspektivische Darstellung eines Feldgeräts mit dem Gehäuse.

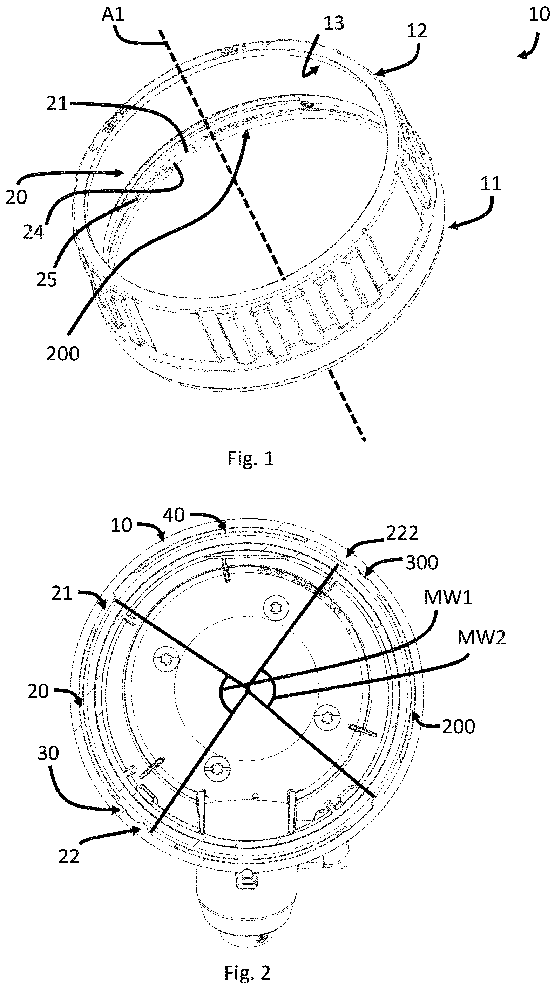

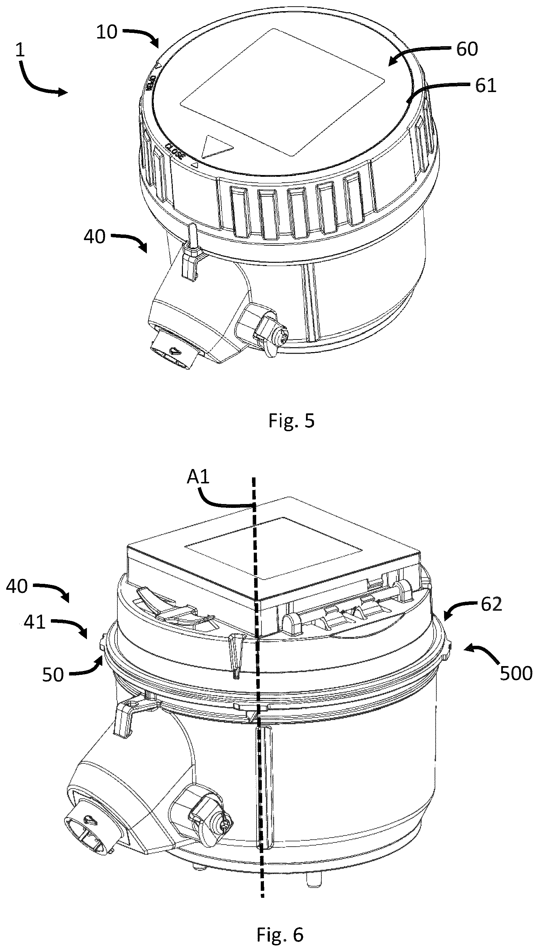

Figur 1 zeigt ein erfindungsgemäßes Befestigungsteil 10 für ein Gehäuse 1 eines Feldgeräts. Ein beispielhaftes Feldgerät mit Gehäuse 1 und Befestigungsteil 10 wird in Figur 5 dargestellt.

Das Befestigungsteil 10 ist ringförmig, beziehungsweise hülsenförmig, und erstreckt sich um eine Längsachse A1. Das Befestigungsteil 10 weist einen ersten Rand 11 und einen dem ersten Rand 11 gegenüberliegenden zweiten Rand 12 auf. Der erste Rand 11 weist mindestens zwei Bajonettnuten 20, 200 auf, welche dazu geeignet sind, das Befestigungsteil 10 an dem Gehäuse 1 zu befestigen. Der zweite Rand 12 weist vorzugsweise einen Vorsprung 13 auf, welcher sich radial zur Längsachse A1 erstreckt. Der Vorsprung 13 erstreckt sich vorzugsweise nach innen des Befestigungsteils 10, also der Längsachse A1 zugewandt. Der Vorsprung 13 ist dazu geeignet, eine Abdeckung 60 auf dem Gehäusekörper 40 zu halten. Gemäß einer alternativen Ausführungsform ist das Befestigungsteil 10 topfförmig, so dass das Gehäuse 1 nach verbinden des Befestigungsteils 10 und des Gehäusekörpers 40 verschlossen ist (nicht dargestellt). Das Befestigungsteil 10 ist aus einem elastischen Material hergestellt, oder umfasst zumindest ein elastisches Material, so dass das Befestigungsteil 10 elastisch verformbar ist. Das Befestigungsteil 10 ist zum Beispiel aus Kunststoff hergestellt.

Der Einfachheit halber werden mehrfach vorkommende identische Elemente im Nachfolgenden nur im Singular beschrieben, auch wenn mehrere Elemente gemeint sind. Dies wird durch die Nennung von mehreren Bezugszeichen, z.B. 20 und 200, ersichtlich gemacht.

Die Bajonettnut 20, 200 weist jeweils einen Einlass 21, 221, eine Rippe 30, 300, einen Anschlag 22, 222 und einen Nutboden 23, 223 mit einer Nuttiefe T1, T2 auf (siehe Figur 1 bis Figur 4).

Die Bajonettnut 20, 200 ist vorzugsweise innen am Befestigungsteil 10, das heißt der Längsachse A1 zugewandt, angeordnet. Selbstverständlich ist es jedoch auch alternativ möglich, die Bajonettnut 20, 200 außen am Befestigungsteil 10, also auf einer der Längsachse A1 abgewandten Seite des Befestigungsteils 10, anzuordnen. Die Bajonettnut 20, 200 erstreckt sich entlang der Längsachse A1 und quer zur Längsachse A1 um die Längsachse A1. Wie in Figur 1 dargestellt, weist die Bajonettnut 20, 200 eine Längsnut 24, 224 und eine Quernut 25, 225 auf. Wobei die Quernut 25, 225 parallel oder schräg zum ersten Rand 11 verläuft. Eine schräg zum ersten Rand 11 verlaufende Quernut 25 hat den Vorteil, dass wenn ein Dichtring zwischen das Befestigungsteil 10 und einen Gehäusekörper 40 angeordnet ist, der Dichtring beim Befestigen des Befestigungsteils 10 am Gehäusekörper 40 einem Anpressdruck aussetzbar ist. Die Bajonettnut 20, 200 definiert mit dem Einlass 21, 221 und dem Anschlag 22, 222 einen Mittelpunktswinkel MW1, MW2 zwischen 10° und 150° an der Längsachse A1 (siehe Figur 2). Erstreckt sich also die Bajonettnut 20, 200 nur über einen kurzen Abschnitt entlang des Befestigungsteils 10, zum Beispiel einen Abschnitt, welcher einen Mittelpunktswinkel von 10° aufspannt, so können eine Vielzahl an Bajonettnuten an dem Befestigungsteil 10 entlang angebracht werden.

Figur 2 zeigt eine Ausführungsform mit zwei Bajonettnuten 20, 200, welche zueinander gegenüberliegend am Befestigungsteil 10 angeordnet sind.

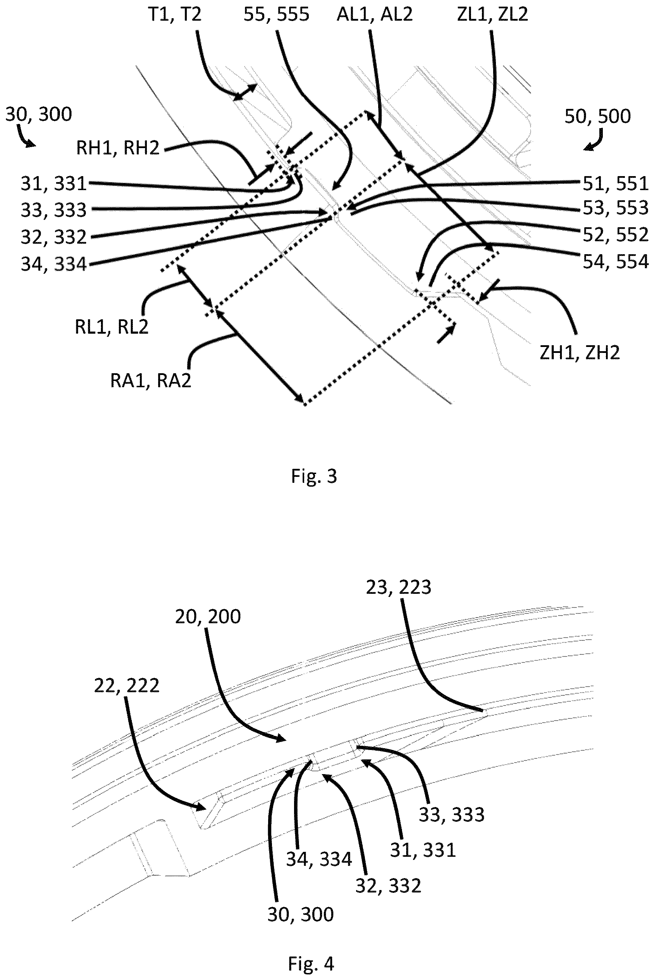

Der Anschlag 22, 222 begrenzt die Bajonettnut 20, 200 in ihrer Erstreckung um die Längsachse A1. Der Anschlag 22, 222 bildet also das Ende des durch die Bajonettnut 20, 200 gebildeten Kanals. Der Anschlag 22, 222 formt eine Wand zum Nutboden 23, 223. Der Anschlag 22, 222 weist zum Beispiel eine Flanke auf, was in Figur 4 im Detail dargestellt ist. Alternativ hierzu ist der Anschlag 22, 222 beispielsweise 90° oder in einem anderen Winkel zum Nutboden 23, 223 angeordnet (nicht dargestellt).

Die Rippe 30, 300 erstreckt sich um die Längsachse A1 und ein erstes Rippenende 31, 331 sowie weist ein zweites Rippenende 32, 332 auf (siehe Figur 4). Die Rippe 30, 300 ist zwischen dem Einlass 21, 221 und dem Anschlag 22, 222 auf dem Nutboden 23, 223 angeordnet (siehe Figur 2). Die Rippe 30, 300 erstreckt sich vom Nutboden 23, 223 radial zur Längsachse A1 mit einer vorbestimmten Rippenhöhe RH1, RH2. Die Rippenhöhe RH1, RH2 ist geringer als die Nuttiefe T1, T2 der Bajonettnut 20, 200. Die Rippenhöhe RH1, RH2 beträgt zum Beispiel zwischen 1 mm und 5 mm. Das erste Rippenende 31, 331 und das zweite Rippenende 32, 332 definieren eine Rippenlänge RL1, RL2.

Das erste Rippenende 31, 331 weist vorzugsweise eine erste Rippenfase 33, 333 auf und das zweite Rippenende 32, 332 weist vorzugsweise eine zweite Rippenfase 34, 334 auf. Die Rippenfasen 33, 34, 333, 334 weisen beispielsweise eine Neigung zwischen 10° und 60° relativ zum Nutboden 23, 223 auf.

Das Gehäuse 1 umfasst das oben beschriebene Befestigungsteil 10 und einen zylinderförmigen, beziehungsweise topfförmigen, Gehäusekörper 40 (siehe Figur 5).

Der Gehäusekörper 40 erstreckt sich um die Längsachse A1 und weist einen Gehäuserand 41 auf, welcher mindestens zwei Bajonettzähne 50, 500 aufweist, die sich jeweils radial zur Längsachse A1 erstrecken (siehe Figur 6).

Der Bajonettzahn 50, 500 erstreckt sich vorzugsweise von der Längsachse A1 weg, also nach Außen des Gehäusekörpers 40. Der Bajonettzahn 50, 500 weist eine Zahnhöhe ZH1, ZH2 auf. Die Zahnhöhe ZH1, ZH2 ist vorzugsweise geringer als die Nuttiefe T1, T2. Der Bajonettzahn 50, 500 ist derart ausgestaltet, dass er in die Bajonettnut 20, 200 einführbar ist. Wenn die Bajonettnut 20, 200 außen an dem Befestigungsteil 10 angebracht ist, ist der Bajonettzahn 50, 500 innen am Gehäusekörper 40, also zur Längsachse A1 hin, ausgerichtet.

Der Bajonettzahn 50, 500 ist komplementär zur Bajonettnut 20, 200. Dies bedeutet, dass die Rippe 30, 300 und der Bajonettzahn 50, 500 derart ineinandergreifen, dass das Befestigungsteil 10 am Gehäusekörper 40 befestigbar ist. Das Befestigungsteil 10 ist also am Gehäusekörper 40 in einer geschlossenen Position durch die Rippe 30, 300 und den Bajonettzahn 50, 500 haltbar. Hierzu wird der Bajonettzahn 50, 500 in die Bajonettnut 20, 200 eingeführt und soweit bewegt, dass der Bajonettzahn 50, 500 und die Rippe 30, 300 ineinandergreifen.

Die Rippe 30, 300 und der Bajonettzahn 50, 500 sind dazu geeignet, miteinander in Kontakt zu kommen, wenn der Bajonettzahn 50, 500 relativ zur Rippe 30, 300 in den Bajonettnuten 20, 200 bewegt wird. Beim Bewegen des Bajonettzahns 50, 500 relativ zur Rippe 30, 300 kann es zu einem Verhaken zwischen Bajonettzahn und Rippe kommen. Aus diesem Grund ist es vorteilhaft, Fasen am Bajonettzahn und/oder an der Rippe anzubringen, was im Folgenden dargestellt wird.

Der Bajonettzahn 50, 500 weist ein erstes Zahnende 51, 551 und ein zweites Zahnende 52, 552 auf. Wie in Figur 3 zu sehen, ist gemäß einer Ausführungsform am ersten Zahnende 51, 551 eine erste Zahnfase 53, 553 und am zweiten Zahnende 52, 552 eine zweite Zahnfase 54, 554 angebracht. Die Zahnfasen ermöglichen, dass die Rippe beim Bewegen des Befestigungsteils 10 möglichst ohne ein Verhaken relativ zum Bajonettzahn in der Bajonettnut bewegbar ist.

Wie in Figur 3 und Figur 4 zu sehen ist, ist gemäß einer Ausführungsform, welche mit den zuvor genannten Ausführungsformen kompatibel ist, am ersten Rippenende 31, 331 eine erste Rippenfase 33, 333 und am zweiten Rippenende 32, 332 eine zweite Rippenfase 34, 334 angeordnet. Weist die Rippe zusätzlich zum Bajonettzahn Rippenfasen auf, so lässt sich ein Verhaken zwischen Rippe und Bajonettzahn vermeiden.

Es ist somit vorteilhaft, wenn entweder die Rippe zwei Rippenfasen aufweist oder der Bajonettzahn zwei Zahnfasen aufweist. Idealerweise weist die Rippe zwei Rippenfasen auf sowie der Bajonettzahn weist zwei Zahnfasen auf.

Gemäß einer alternativen Ausführungsform weist der Bajonettzahn 50, 500 am ersten Zahnende 51, 551 eine erste Zahnfase 53, 553 und die Rippe 30, 300 am zweiten Rippenende 32, 332 eine zweite Rippenfase 34, 334 auf. Somit ist bei einer relativen Bewegung zwischen Rippe 30, 300 und Bajonettzahn 50, 500 in beide Bewegungsrichtungen entlang der Bajonettnut 20, 200 mindestens eine Fase vorhanden, welche ein Verhaken von Rippe 30, 300 und Bajonettzahn 50, 500 vermeidet.

Gemäß einer alternativen Ausführungsform weist die Rippe 30, 300 am ersten Rippenende 31, 331 eine erste Rippenfase 33, 333 und der Bajonettzahn 50, 500 am zweiten Zahnende 52, 552 eine zweite Zahnfase 54, 554 auf. Somit ist bei einer relativen Bewegung zwischen Rippe 30, 300 und Bajonettzahn 50, 500 in beide Bewegungsrichtungen entlang der Bajonettnut 20, 200 mindestens eine Fase vorhanden, welche ein Verhaken von Rippe 30, 300 und Bajonettzahn 50, 500 vermeidet.

In Figur 3 ist das Zusammenspiel zwischen Bajonettnut 20, 200 und Bajonettzahn 50, 500 im Detail dargestellt.

Das erste Zahnende 51, 551 und das zweite Zahnende 52, 552 definieren eine Zahnlänge ZL1, ZL2. Das zweite Rippenende 32, 332 und der Anschlag 22, 222 definieren eine Rippen-Anschlag-Länge RA1, RA2. Die Zahnlänge ZL1, ZL2 und die Rippen-Anschlag-Länge RA1, RA2 sind vorzugsweise identisch, so dass der Bajonettzahn 50, 500 dazu geeignet ist, zwischen die Rippe 30, 300 und den Anschlag 22, 222 zu greifen.

Gemäß einer optionalen Ausführungsform, welche in der Figur 2, 3 und 6 dargestellt ist, und mit allen beschriebenen Ausführungsformen kompatibel ist, weist der Bajonettzahn 50, 500 eine Aussparung 55, 555 auf, welche zwischen dem ersten Zahnende 51, 551 und dem zweiten Zahnende 52, 552 angeordnet ist. Die Aussparung 55, 555 weist eine Aussparungslänge AL1, AL2 auf. Die Aussparungslänge AL1, AL2 und die Rippenlänge **RL1,** RL2 sind vorzugsweise identisch, so dass die Rippe 30, 300 dazu geeignet ist, in die Aussparung 55, 555 zu greifen.

Wie in Figur 5 zu sehen, weist das Gehäuse 1 des Weiteren optional eine Abdeckung 60 auf, welche dazu geeignet ist, mittels dem Befestigungsteil 10 am Gehäusekörper 40 befestigt zu werden. Die Abdeckung 60 weist eine Kante 61 auf, welche dazu geeignet ist, in den Vorsprung 13 des Befestigungsteils 10 einzugreifen. Dies ermöglicht ein Befestigen der Abdeckung 60 durch das Befestigungsteil 10 an dem Gehäusekörper 40. Zwischen der Abdeckung 60 und dem Gehäusekörper 40 ist vorzugsweise eine Dichtung 62, zum Beispiel ein Dichtring angeordnet. Beim Verbinden des Befestigungsteil 10 mit dem Gehäusekörper 40 wird dank der schrägen Bajonettnut 20, 200 eine Anpresskraft vom Befestigungsteil 10 auf die Abdeckung 60 ausgeübt, welche den Dichtring verpresst.

In einer alternativen Ausführungsform ist das Befestigungsteil 10 mit der Abdeckung 60 einstückig ausgebildet (nicht dargestellt).

### Bezugszeichenliste

- 1: Gehäuse

- 10: Befestigungsteil
- 11: erster Rand
- 12: zweiter Rand
- 13: Vorsprung

- 20: erste Bajonettnut
- 21: Einlass
- 22: Anschlag
- 23: Nutboden
- 24: Längsnut
- 25: Quernut

- 30: Rippe
- 31: erstes Rippenende
- 32: zweites Rippenende
- 33: erste Rippenfase
- 34: zweite Rippenfase

- 40: Gehäusekörper
- 41: Gehäuserand

- 50: erster Bajonettzahn
- 51: erstes Zahnende
- 52: zweites Zahnende
- 53: erste Zahnfase
- 54: zweite Zahnfase
- 55: Aussparung

- 60: Abdeckung
- 61: Kante
- 62: Dichtung

- 200: zweite Bajonettnut
- 221: Einlass
- 222: Anschlag
- 223: Nutboden
- 224: Längsnut
- 225: Quernut

- 300: Rippe
- 331: erstes Rippenende
- 332: zweites Rippenende
- 333: erste Rippenfase
- 334: zweite Rippenfase

- 500: zweiter Bajonettzahn
- 551: erstes Zahnende
- 552: zweites Zahnende
- 553: erste Zahnfase
- 554: zweite Zahnfase
- 555: Aussparung

- A1: Längsachse
- AL1, AL2: Aussparungslänge
- MW1, MW2: Mittelpunktswinkel
- RL1, RL2: Rippenlänge
- RH1, RH2: Rippenhöhe
- T1, T2: Nuttiefe
- ZL1, ZL2: Zahnlänge
- ZH1, ZH2: Zahnhöhe

## Patentansprüche

1. Befestigungsteil (10) für eine Abdeckung (60) an einem Gehäuse (1), wobei das Befestigungsteil (10) ringförmig ist und sich um eine Längsachse (A1) erstreckt,
wobei das Befestigungsteil (10) einen ersten Rand (11) und einen dem ersten Rand (11) gegenüberliegenden zweiten Rand (12) aufweist,
wobei der erste Rand (11) mindestens zwei Bajonettnuten (20, 200) aufweist, wobei sich die Bajonettnuten (20, 200) entlang der Längsachse (A1) und quer zur Längsachse (A1) um die Längsachse (A1) erstreckt,
wobei die Bajonettnuten (20, 200) jeweils einen Einlass (21, 221), eine Rippe (30, 300), einen Anschlag (22, 222) und einen Nutboden (23, 223) mit einer Nuttiefe (T1, T2) aufweist,
wobei der Anschlag (22, 222) die Bajonettnuten (20, 200) in ihrer Erstreckung um die Längsachse (A1) begrenzt,
wobei die Rippe (30, 300) zwischen dem Einlass (21, 221) und dem Anschlag (22, 222) auf dem Nutboden (23, 223) angeordnet ist und sich vom Nutboden (23, 223) radial zur Längsachse (A1) mit einer vorbestimmten Höhe (H1, H2) erstreckt, **gekennzeichnet dadurch, daß**
der zweite Rand (12) einen Vorsprung (13) aufweist, welcher sich radial zur Längsachse (A1) hin erstreckt.

2. Befestigungsteil (10) gemäß Anspruch 1, wobei sich die Rippe (30, 300) um die Längsachse (A1) erstreckt und ein erstes Rippenende (31, 331) sowie ein zweites Rippenende (32, 332) aufweist, wobei das erste Rippenende (31, 331) eine erste Rippenfase (33, 333) aufweist und das zweite Rippenende (32, 332) eine zweite Rippenfase (34, 334) aufweist.

3. Befestigungsteil (10) gemäß einem der vorhergehenden Ansprüche, wobei das Befestigungsteil (10) ein elastisches Material umfasst.

4. Befestigungsteil (10) gemäß einem der vorhergehenden Ansprüche, wobei die Bajonettnut (20, 200) eine Längsnut (24, 224) und eine Quernut (25, 225) aufweist, wobei die Quernut (25, 225) parallel oder schräg zum ersten Rand (11) verläuft.

5. Befestigungsteil (10) gemäß einem der vorhergehenden Ansprüche, wobei die Bajonettnuten (20, 200) jeweils mit dem Einlass (21, 221) und dem Anschlag (22, 222) einen Mittelpunktswinkel (MW1, MW2) zwischen 10° und 150° an der Längsachse (A1) definieren.

6. Befestigungsteil (10) gemäß einem der vorhergehenden Ansprüche, wobei das Befestigungsteil (10) mindestens eine erste Bajonettnut (20) und eine der ersten Bajonettnut (20) am Befestigungsteil (10) gegenüberliegende zweite Bajonettnut (200) aufweist.

7. Gehäuse (1) für ein Feldgerät, umfassend:
- ein Befestigungsteil (10) gemäß einem der vorhergehenden Ansprüche,
- einen zylinderförmigen Gehäusekörper (40), welcher sich um die Längsachse (A1) erstreckt und einen Gehäuserand (41) aufweist, welcher mindestens zwei Bajonettzähne (50, 500) aufweist, die sich jeweils radial zur Längsachse (A1) erstrecken,
wobei die Bajonettzähne (50, 500) jeweils komplementär zu den Bajonettnuten (20, 200) sind,
wobei die Bajonettzähne (50, 500) ein erstes Zahnende (51, 551) und ein zweites Zahnende (52, 552) aufweisen,
wobei am ersten Zahnende (51, 551) eine erste Zahnfase (53, 553) und am zweiten Zahnende (52, 552) eine zweite Zahnfase (54, 554) und/oder am ersten Rippenende (31, 331) eine erste Rippenfase (33, 333) und am zweiten Rippenende (32, 332) eine zweite Rippenfase (34, 334) angeordnet ist, oder
wobei am ersten Zahnende (51, 551) eine erste Zahnfase (53, 553) und am zweiten Rippenende (32, 332) eine zweite Rippenfase (34, 334) oder am ersten Rippenende (31, 331) eine erste Rippenfase (33, 333) und am zweiten Zahnende (52, 552) eine zweite Zahnfase (54, 554) angeordnet ist,
wobei die Rippen (30, 300) und die Bajonettzähne (50, 500) dazu geeignet sind, miteinander in Kontakt zu kommen, wenn die Bajonettzähne (50, 500) in den Bajonettnuten (20, 200) bewegt werden.

8. Gehäuse (1) gemäß Anspruch 7, wobei das erste Zahnende (51, 551) und das zweite Zahnende (52, 552) eine Zahnlänge (ZL1, ZL2) definieren und das zweite Rippenende (32, 332) und der Anschlag (22, 222) eine Rippen-Anschlag-Länge (RA1, RA2) definieren, wobei die Zahnlänge (ZL1, ZL2) und die Rippen-Anschlag-Länge (RA1, RA2) identisch sind, so dass der Bajonettzahn (50, 500) dazu geeignet ist, zwischen die Rippe (30, 300) und den Anschlag (22, 222) zu greifen.

9. Gehäuse (1) gemäß Anspruch 7 oder 8, wobei das erste Rippenende (31, 331) und das zweite Rippenende (32, 332) eine Rippenlänge (RL1, RL2) definieren und der Bajonettzahn (50, 500) eine Aussparung (55, 555) aufweist, welche zwischen dem ersten Zahnende (51, 551) und dem zweiten Zahnende (52, 552) angeordnet ist und eine Aussparungslänge (AL1, AL2) aufweist, wobei die Aussparungslänge (AL1, AL2) und die Rippenlänge (RL1, RL2) identisch sind, so dass die Rippe (30, 300) dazu geeignet ist, in die Aussparung (55, 555) zu greifen.

## Claims

1. Fastening element (10) for a cover (60) on a housing (1), wherein the fastening element (10) is annular and extends around a longitudinal axis (A1),
wherein the fastening element (10) has a first edge (11) and a second edge (12) opposite the first edge (11),
wherein the first edge (11) has at least two bayonet grooves (20, 200),
wherein the bayonet grooves (20, 200) extend along the longitudinal axis (A1) and transversely to the longitudinal axis (A1) around the longitudinal axis (A1),
wherein the bayonet grooves (20, 200) each have an inlet (21, 221), a rib (30, 300), a stop (22, 222) and a groove base (23, 223) with a groove depth (T1, T2),
wherein the stop (22, 222) limits the bayonet grooves (20, 200) in their extension around the longitudinal axis (A1),
wherein the rib (30, 300) is arranged between the inlet (21, 221) and the stop (22, 222) on the groove base (23, 223) and extends from the groove base (23, 223) radially to the longitudinal axis (A1) with a predetermined height (H1, H2),
**characterized in that**
the second edge (12) has a projection (13) which extends radially towards the longitudinal axis (A1).

2. Fastening element (10) according to claim 1, wherein the rib (30, 300) extends around the longitudinal axis (A1) and has a first rib end (31, 331) and a second rib end (32, 332), wherein the first rib end (31, 331) has a first rib chamfer (33, 333) and the second rib end (32, 332) has a second rib chamfer (34, 334).

3. Fastening element (10) according to one of the preceding claims, wherein the fastening element (10) comprises an elastic material.

4. Fastening element (10) according to one of the preceding claims, wherein the bayonet groove (20, 200) has a longitudinal groove (24, 224) and a transverse groove (25, 225), wherein the transverse groove (25, 225) runs parallel or obliquely to the first edge (11).

5. Fastening element (10) according to one of the preceding claims, wherein the bayonet grooves (20, 200) each define a center angle (MW1, MW2) between 10° and 150° on the longitudinal axis (A1).

6. Fastening element (10) according to one of the preceding claims, wherein the fastening element (10) has at least one first bayonet groove (20) and a second bayonet groove (200) opposite the first bayonet groove (20) on the fastening element (10).

7. Housing (1) for a field device, comprising:
- a fastening element (10) according to one of the preceding claims,
- a cylindrical housing body (40) which extends around the longitudinal axis (A1) and has a housing edge (41) which has at least two bayonet teeth (50, 500) which each extend radially to the longitudinal axis (A1),
wherein the bayonet teeth (50, 500) are each complementary to the bayonet grooves (20, 200),
wherein the bayonet teeth (50, 500) have a first tooth end (51, 551) and a second tooth end (52, 552),
wherein a first tooth chamfer (53, 553) is arranged at the first tooth end (51, 551) and a second tooth chamfer (54, 554) and/or a first rib chamfer (33, 333) is arranged at the second tooth end (52, 552) and at the first rib end (31, 331), (33, 333) is arranged on the first rib end (31, 331) and a second rib chamfer (34, 334) is arranged on the second rib end (32, 332), or
wherein a first tooth chamfer (53, 553) is arranged at the first tooth end (51, 551) and a second rib chamfer (34, 334) is arranged at the first rib end (31, 331) and a second tooth chamfer (54, 554) is arranged at the second tooth end (52, 552),
wherein the ribs (30, 300) and the bayonet teeth (50, 500) are adapted to come into contact with each other when the bayonet teeth (50, 500) are moved in the bayonet grooves (20, 200).

8. Housing (1) according to claim 7, wherein the first tooth end (51, 551) and the second tooth end (52, 552) define a tooth length (ZL1, ZL2) and the second rib end (32, 332) and the stop (22, 222) define a rib stop length (RA1, RA2), wherein the tooth length (ZL1, ZL2) and the rib stop length (RA1, RA2) are identical, so that the bayonet tooth (50, 500) is suitable for engaging between the rib (30, 300) and the stop (22, 222).

9. Housing (1) according to claim 7 or 8, wherein the first rib end (31, 331) and the second rib end (32, 332) define a rib length (RL1, RL2) and the bayonet tooth (50, 500) has a recess (55, 555) which is arranged between the first tooth end (51, 551) and the second tooth end (52, 552) and has a recess length (AL1, AL2), wherein the recess length (AL1, AL2) and the rib length (RL1, RL2) are identical, so that the rib (30, 300) is suitable for engaging in the recess (55, 555).

## Revendications

1. Élément de fixation (10) pour un couvercle (60) sur un boîtier (1), l'élément de fixation (10) étant de forme annulaire et s'étendant autour d'un axe longitudinal (A1), l'élément de fixation (10) présentant un premier bord (11) et un deuxième bord (12) opposé au premier bord (11),
le premier bord (11) comportant au moins deux rainures à baïonnette (20, 200),
les rainures à baïonnette (20, 200) s'étendant le long de l'axe longitudinal (A1) et transversalement à l'axe longitudinal (A1) autour de l'axe longitudinal (A1),
les rainures à baïonnette (20, 200) comportant chacune une entrée (21, 221), une nervure (30, 300), une butée (22, 222) et un fond de rainure (23, 223) avec une profondeur de rainure (T1, T2),
la butée (22, 222) limitant l'extension des rainures à baïonnette (20, 200) autour de l'axe longitudinal (A1),
la nervure (30, 300) étant disposée entre l'entrée (21, 221) et la butée (22, 222) sur le fond de rainure (23, 223) et s'étendant depuis le fond de rainure (23, 223) radialement par rapport à l'axe longitudinal (A1) sur une hauteur prédéterminée (H1, H2), **caractérisé en ce que**
le deuxième bord (12) comporte une saillie (13) qui s'étend radialement vers l'axe longitudinal (A1).

2. Élément de fixation (10) selon la revendication 1, dans lequel la nervure (30, 300) s'étend autour de l'axe longitudinal (A1) et présente une première extrémité de nervure (31, 331) et une deuxième extrémité de nervure (32, 332), la première extrémité de nervure (31, 331) présentant un premier chanfrein de nervure (33, 333) et la deuxième extrémité de nervure (32, 332) présentant un deuxième chanfrein de nervure (34, 334).

3. Élément de fixation (10) selon l'une des revendications précédentes, l'élément de fixation (10) comprenant un matériau élastique.

4. Élément de fixation (10) selon l'une des revendications précédentes, la rainure à baïonnette (20, 200) présentant une rainure longitudinale (24, 224) et une rainure transversale (25, 225), la rainure transversale (25, 225) s'étendant parallèlement ou obliquement au premier bord (11).

5. Élément de fixation (10) selon l'une des revendications précédentes, les rainures à baïonnette (20, 200) définissant chacune avec l'entrée (21, 221) et la butée (22, 222) un angle central (MW1, MW2) compris entre 10° et 150° par rapport à l'axe longitudinal (A1).

6. Élément de fixation (10) selon l'une des revendications précédentes, la pièce de fixation (10) comportant au moins une première rainure à baïonnette (20) et une deuxième rainure à baïonnette (200) opposée à la première rainure à baïonnette (20) sur la pièce de fixation (10).

7. Boîtier (1) pour un appareil de terrain, comprenant :
- une élément de fixation (10) selon l'une des revendications précédentes,
- un corps de boîtier cylindrique (40) qui s'étend autour de l'axe longitudinal (A1) et comporte un bord de boîtier (41) qui comporte au moins deux dents à baïonnette (50, 500) qui s'étendent chacune radialement par rapport à l'axe longitudinal (A1),
les dents à baïonnette (50, 500) étant chacune complémentaires aux rainures à baïonnette (20, 200),
les dents à baïonnette (50, 500) présentant une première extrémité de dent (51, 551) et une deuxième extrémité de dent (52, 552),
une première chanfrein de dent (53, 553) étant disposée sur la première extrémité de dent (51, 551) et une deuxième chanfrein de dent (54, 554) et/ou une première chanfrein de nervure (33, 333) étant disposée sur la deuxième extrémité de dent (52, 552) et une deuxième chanfrein de nervure (34, 334) étant disposée sur la deuxième extrémité de nervure (32, 332), ou (33, 333) est disposé sur la première extrémité de nervure (31, 331) et un deuxième chanfrein de nervure (34, 334) est disposé sur la deuxième extrémité de nervure (32, 332), ou
une première chanfrein de dent (53, 553) étant disposé à la première extrémité de dent (51, 551) et un deuxième chanfrein de nervure (34, 334) étant disposé à la deuxième extrémité de nervure (32, 332) (34, 334) est disposé à la première extrémité de dent (51, 551) et un deuxième chanfrein de dent (54, 554) est disposé à la deuxième extrémité de dent (52, 552),
les nervures (30, 300) et les dents à baïonnette (50, 500) étant adaptées pour entrer en contact les unes avec les autres lorsque les dents à baïonnette (50, 500) sont déplacées dans les rainures à baïonnette (20, 200).

8. Boîtier (1) selon la revendication 7, dans lequel la première extrémité de dent (51, 551) et la deuxième extrémité de dent (52, 552) définissent une longueur de dent (ZL1, ZL2) et la deuxième extrémité de nervure (32, 332) et la butée (22, 222) définissent une longueur de nervure-butée (RA1, RA2), la longueur de dent (ZL1, ZL2) et la longueur de butée de nervure (RA1, RA2) étant identiques, de sorte que la dent à baïonnette (50, 500) est adaptée pour s'engager entre la nervure (30, 300) et la butée (22, 222).

9. Boîtier (1) selon la revendication 7 ou 8, dans lequel la première extrémité de nervure (31, 331) et la deuxième extrémité de nervure (32, 332) définissent une longueur de nervure (RL1, RL2) et la dent à baïonnette (50, 500) présente un évidement (55, 555) qui est disposé entre la première extrémité de dent (51, 551) et la deuxième extrémité de dent (52, 552) et présente une longueur d'évidement (AL1, AL2), la longueur d'évidement (AL1, AL2) et la longueur de nervure (RL1, RL2) étant identiques, de sorte que la nervure (30, 300) est adaptée pour s'engager dans l'évidement (55, 555).
